# EUROPEAN PATENT SPECIFICATION

(11) **EP 1 963 707 B1**
(45) Date of publication and mention of the grant of the patent: **28.11.2012**
(21) Application number: 05851041.3
(22) Date of filing: 15.12.2005
(51) Int. Cl.: F16G 5/16

(54) **DRIVE BELT AND METHOD FOR FORMING A TRANSVERSE ELEMENT THEREOF**
TREIBRIEMEN UND VERFAHREN ZUM BILDEN EINES QUERELEMENTS DAVON
COURROIE D'ENTRAINEMENT ET PROCEDE DE FABRICATION D'UN ELEMENT TRANSVERSAL

(43) Date of publication of application: 03.09.2008
(73) Proprietor: ROBERT BOSCH GMBH, 70442 Stuttgart (DE)
(72) Inventor: MUTSAERS, Robert, Arnoldus, Andreas, 5062 LV Oisterwijk (NL); FEIJTEL, Jasper, 3319 EV Dordrecht (NL); PASTEUNING, Jan, Willem, Nicolaas, 5223 ML 's Hertogenbosch (NL)
(74) Representative: Plevier, Gabriel Anton Johan Maria
(86) International application number: PCT/NL2005/000859
(87) International publication number: WO 2007/069883

(56) References cited:
- EP-A- 0 269 270
- EP-A- 1 061 285
- EP-A- 1 424 508
- WO-A-2004/036083
- PATENT ABSTRACTS OF JAPAN vol. 2002, no. 11, 6 November 2002 (2002-11-06) -& JP 2002 213539 A (NISSAN MOTOR CO LTD), 31 July 2002 (2002-07-31)
- PATENT ABSTRACTS OF JAPAN vol. 010, no. 286 (M-521), 27 September 1986 (1986-09-27) -& JP 61 103028 A (TOYOTA MOTOR CORP), 21 May 1986 (1986-05-21)

## Description

The present invention relates to a drive belt as described in the preamble of claim 1 below, as well as to a method for forming a transverse element applied therein.

Drive belts of this type are generally known. One example thereof is provided by the International Patent publication WO-A-2004/036083 in the name of Applicant. In this example, the drive belt comprises transverse elements having a front main surface that incorporates minimally thickened portions or contact regions that are designed for contacting a rear main surface of an adjacent element. Such contact regions promote the correct bearing of the transverse elements against one another, improve the straight-on stability of the drive belt and improve their production. Also, these thicker regions make it easier to control the overall element thickness, since the front main surface needs to be accurately formed only partly and since only these parts have to be monitored for manufacturing deviations.

According to this prior art preferably three thickened portions or contact regions are used, one arranged in the predominantly arrowhead-shaped head part of a transverse element, i.e. that part of the transverse element which extends radially beyond the belt's ring shaped carrier assemblies, and two arranged below a neck part of the transverse element, i.e. in the body part of the transverse element, i.e. that part of the transverse element which is located radially inside the carrier assemblies. These two lower contact regions are situated most laterally, so that for instance an effect of - manufacturing- tolerances in thickness of these contact regions is minimised. In the same manner the height distance between these lower contact regions and the other, i.e. upper contact region is kept as large as possible.

According to this prior art, improvement in belt design was also sought in minimising the element weight, which is in fact a measure for increasing the torque capacity or fatigue service life of the belt, as well as the amount of material used in its manufacture by reducing the height thereof. This was realised by applying the measure of shaping the neck part of the element with laterally inclined side faces that diverge towards the head part, which enables a relatively low positioning of an element's boss part, i.e. a protrusion included in the head part. In this respect, typically, the lower part of the protrusion adjoins or crosses an imaginary line between the under side of lateral lugs of the element head part extending over and confining the carrier assemblies in radially outward direction. So as to maintain the desired height distance between the upper and lower contact regions, the upper contact region was situated with preference only above the projecting boss, whilst adjoining the upper edge of the head part.

The solution provided according to the prior art, however, appeared not to be fully satisfactorily in practice, in the sense that at least with the conjointly proposed favourable use of a so-called contraction or retraction effect at blanking the element form metal sheet material, which effect is utilised at the lugs for a thinning thereof relative to the upper contact region as described in WO-A-2004/036083, was found to occur to a significant extent also at the upper edge of the head part. Hereby, a considerable part if not the whole of the upper contact region is taken away, or, to prevent such, at least the height distance between the upper and lower contact regions has to be dramatically and unfavourably reduced. This means that the principle of forming the upper contract region at least partly by the contraction of the material at the edges of the lugs, which occurs as a side effect of element blanking as disclosed in the prior art publication, is in practice not attainable, at least not in combination with the likewise disclosed principle of minimising element height.

It is an aim of the present invention to reconcile the above two principles, such that they can favourably be executed together. According to the invention this goal can be realised by modifying the design of the upper part of the transverse element in accordance with the measure from the characterising part of the following claim 1. In line with this measure, the upper edge of the head part of the element extends predominantly laterally, i.e. essentially width-wise over at least the axial width of the element's projecting boss part. By this measure it is favourably realised that at the location of the upper edge of the head part the contraction effect at blanking occurs to a considerably less extent in comparison with the conventional arrowhead-shape thereof. Hereby, the upper contact region may be formed relatively close to the upper edge.

The above effect of the measure according to the invention implies an increase in potential contacting surface of the upper contact region, while still the favourable effects of a reduced element weight and a well-defined mutual element contact with three contact areas can be realised simultaneously.

In the following the invention will be explained in more detail, by way of example, with reference to a drawing in which:
Figure 1 shows a perspective view of a partially cut-away transmission in which the drive belt according to the invention is used.
Figure 2 shows a cross section of the drive belt facing in its peripheral or circumference direction providing a front view of a belt transverse element designed as previously disclosed in the art, as well as a side view of such a known transverse element.
Figure 3 shows in a front view thereof the known transverse element as actually produced in practice when utilising the previously disclosed blanking process for realising the transverse element design represented by figure 2.
Figure 4 provides a front view similar to that of figures 2 and 3, however, of a first embodiment of the transverse element designed in accordance with the invention.
Figure 5 provides a front view similar to that of figure 4 of a second embodiment of the transverse element designed in accordance with the invention.

Throughout the figures, corresponding structural features of the transverse elements are denoted by identical reference numerals.

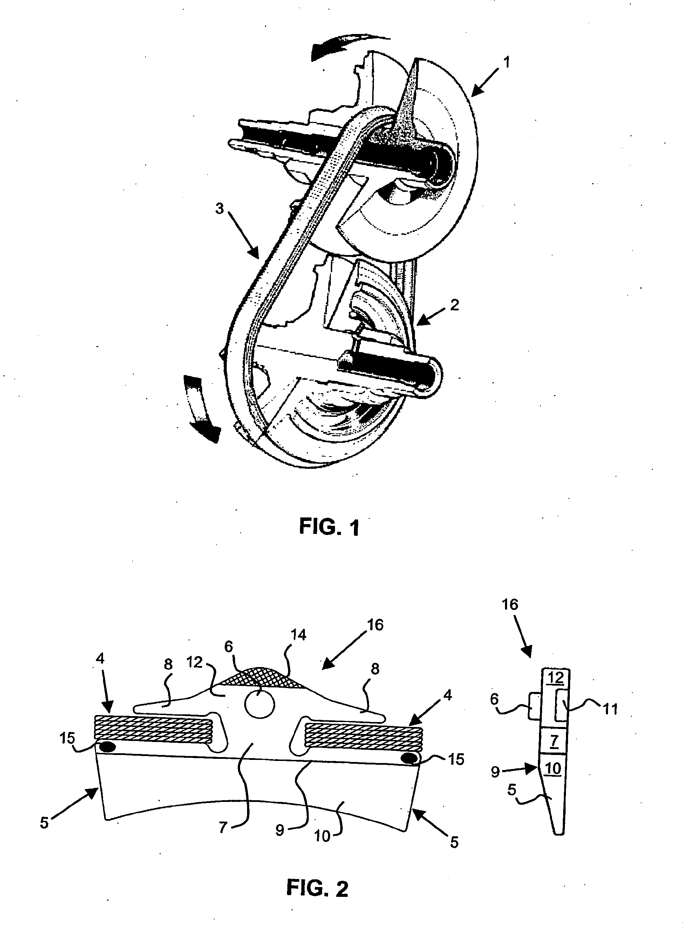

Figure 1 shows the central parts of a continuously variable transmission typically used in a drive line of, for example, passenger cars between the engine and the driven wheels thereof. This transmission is generally known per se and comprises at least a first and a second pair of discs, i.e. pulleys 1 and 2, and a metal drive belt 3 accommodated between the discs of each pulley 1, 2. The discs are formed conical, with at least one disc being arranged in such a manner that it can be displaced in the axial direction along an axle of the corresponding pulley 1, 2. For this purpose, electronically controllable and hydraulically acting displacement means are generally included in the transmission, which means are, however, not shown in the figure. These displacement means are used for adjusting the radial position of the drive belt 3 between the discs of both pulleys 1, 2 and for exerting an axially oriented clamping force, such that a driving force may be transmitted by means of between the pulleys 1, 2 and the drive belt 3 friction in the conical contact surfaces of the pulley discs.

Figure 2 shows a cross section of the known drive belt 3 facing in the peripheral or circumference direction thereof and providing a front view of a transverse element 16 of the belt 3 designed as previously disclosed in the art, as well as a side view of such a known transverse element 16. The drive belt 3 further comprises two continuous, i.e. endless carrier assemblies 4, which each comprise a set of nested flat metal rings, which bear on the transverse elements 16 while being accommodate in a laterally oriented recess thereof and which are thereby able to absorb a radial component of the axial clamping force. In figure 2 these carrier assemblies 4 are shown in cross-section. In the side view of the transverse element 16 in the right-hand part of figure 2 the carrier assemblies 4 are not shown.

It is shown in figure 2 that the transverse element 16 is provided with two predominantly axially oriented side faces 5 in a body part 10 of the transverse element 16 located below, i.e. radially inside the carrier assemblies 4, which side faces 5 are intended for contact with the conical discs of pulleys 1, 2. A projecting boss 6 and a hole 11 associated therewith are provided one either main side of a predominantly arrowhead-shaped head part 12 of the transverse element 16 located above, i.e. radially outside the carrier assemblies 4. During operation of the belt 3 the boss 6 of a succeeding transverse element 16 is at least partly Inserted in the hole 11 of a preceding element 16 such that the adjacent elements 16 in the belt 3 are mutually confined. On each lateral side thereof the head part 12 is provided with a so-called lug 8, which extends in axial direction over a respective carrier assembly 4 to confine the latter in radially outward direction. A neck part 7 of the transverse element 16 is located at the radial level of and separating the carrier assemblies 4, which neck part 7 connects the body part 10 to the head part 12.

The body part 10 of the transverse element 16 is provided with a so-called rocking edge or tilting zone 9, beneath which the transverse element 16 decreases in thickness to allow adjacent elements 13 in the belt 3 to tilt about the axial direction when rounding the pulleys 1, 2. The neck part 7 is slightly V-shaped, i.e. is provided with inclined side faces that diverge towards the head part 12, thereby allowing the boss 6 and the hole 7 to be located relatively close to the neck part 7. In this example a lower edge of the boss 6 intersects a virtual line extending between the lower edges of the lugs 8. Consequently, the radial extent of the head part 12 can be relatively small, such that also the weight of the transverse element 16 is relatively small, such that, ultimately, the torque capacity and/or fatigue service life of the belt 3 the torque transmitting capacity of the belt 3.

Furthermore, a front main face of the known transverse element 16 is designed with three so-called contact regions 14, 15 that are minimally thickened relative to the remaining parts of the front main face, which regions 14, 15 are designed for contacting a rear main surface of a preceding element 16. Such contact regions 14, 15 promote the correct bearing of the transverse elements 16 in the belt 3 against one another. A first or upper contact region 14 is arranged in the head part 12 of the element 16 and second and third or lower contact regions 15 are arranged in the body part 10. These two lower contact regions 15 are situated most laterally so as to minimise the effect of - manufacturing- tolerances in thickness thereof and to provide an optimally stable bearing of mutual contacting, i.e. adjacent transverse elements 16 in the belt 3. For the same reasons, the radial or height distance between these lower contact regions 15 and the upper contact region 14 is also designed as large as possible by positioning the upper contact region 14 as high as possible in the head part 12, i.e. adjoining the upper edge thereof.

Hereby, the contact regions 14, 15 are preferably formed by a thinning of the said remaining parts of the transverse elements 16 at element blanking. Either by pressing material away in lateral direction such as at the location of the neck part 7 or by utilising the edge contraction effect that naturally occurs at element blanking. Although this contraction effect In principle occurs along the entire circumference edge of the transverse element 16, it is only at the lugs 8 that the contraction zone at the lower edge of the lugs 8 overlaps with the contraction zone at the upper edge thereof such that overall a thinning of the lugs 8 is realised.

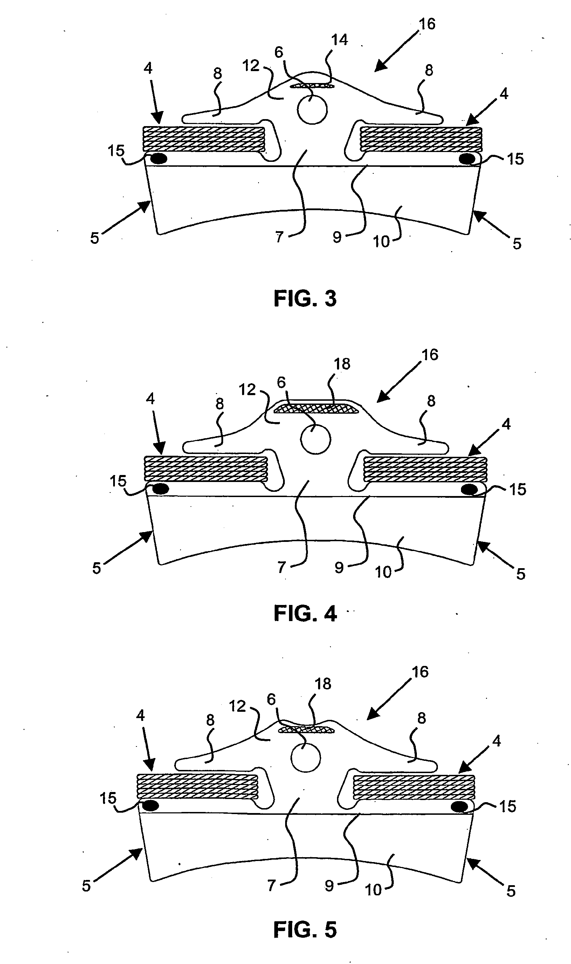

Although the above-described design of the transverse element 16 may thus be technically favourable and desirable per se, in practice a problem is encountered at manufacturing, which is illustrated in figure 3. In figure 3 it is illustrated that a surface area of the upper contact region 14, as indicated by the hatching 14, obtained in practical circumstances is surprisingly limited, because of the extent of the contraction effect that was found to occur near the upper edge of the head part 12. Such upper contact region 14 in fact being insufficient for obtaining manufacturing, i.e. blanking results of required accuracy, or even for realising the desired stable bearing of the transverse elements 16 in the belt 3.

The obvious solutions to this problem would of course be to either increase the radial dimension of the head part 12, or to position the upper contact region 14 lower on the head part 12. In each case, the distance between the upper edge of the head part 18 and the upper contact region 14 is increased, such that the contraction zone at that upper edge does not interfere with, i.e. diminish the upper contact region 14. However, these solutions are disadvantageous in that either the element weight is increased or the radial distance between the upper of lower contact regions is decreased thereby.

Figure 4, in accordance with the present invention, shows a solution to the above-described problem. According to an insight underlying the invention, the surprisingly large radial extent of the contraction zone at the upper edge of the head part 12 is partly due to the head part 12 of the known element design having a more or less pointed shape in the foreseen upper contact region 14 in figure 2. Such conventional shape is in fact applied because of the presence of the boss 6 and hole 11 in the head part 12 that have to be positioned at a certain minimum distance from the said upper edge, which requirement basically results in a circularly shaped upper edge that, in either lateral direction, merges with the upper edge of the lugs 8. Hereby, the radius of curvature of the circularly shaped part of the said upper edge typically amounts to about 3 mm. It was found that in the specific combination of the fine blanking process and the typical overall design and dimensions of the transverse element 16 the contraction zones formed on either lateral side of the head part 12 mutually overlap at the location of the upper edge thereof. This means that at this location a significant thinning of the head part 12 occurs, making it impossible to locally form the upper contact region 14 as foreseen.

Instead, the new element design reflected by figure 4 shows the head part 12 having an upper edge that is shaped essentially flat, i.e. extending predominantly width-wise over, in this example, the smallest axial width of the diverging neck part 7. By this measure the radial extent of the contraction zone at the upper edge of the head part 12 is significantly reduced and the upper contact region 18 may be favourably positioned more radially outward, i.e. close to the said upper edge, while its surface area, as indicated by the hatching 18, remains sufficiently large. Additionally, the axial width of the upper contact region 18 may be increased to match the increased axial width of flat upper edge of the head part 12.

For achieving the above effects, the upper edge of the head part 12 may according to the invention even be slightly convexly curved, although the radius of curvature of such convexly curved upper edge should in any case not be less than 10 mm, i.e. such that the said upper edge still predominantly extends in lateral direction

The upper edge may also be curved concavely, which latter aspect of the invention is illustrated in figure 5. The advantage of this particular embodiment of the invention is that the contraction effect is reduced even further, possibly even completely removed by the effect of material being pushed upward and into the upper edge of the head part 12 at a concavely curved edge in the blanking process.

## Claims

1. Drive belt (3), in particular for use in a continuously variable transmission for passenger cars wherein the drive belt (3) is wrapped around and in frictional contact with two pulleys (1, 2), which drive belt (3) comprises two endless carrier assemblies (4) and a large number of transverse elements (16), whereby each transverse element (16) comprises a body part (10) located radially inside and providing a bearing surface for each of the carrier assemblies (4), a neck part (7) connected to the body part (10) and located between the carrier assemblies (4) and a head part (12) connected to the neck part (7) and located radially outside the carrier assemblies, which head part (12) is provided with a projecting boss (6) and with two lugs (8) that extend in mutually opposite lateral directions, each lug (8) confining one of the carrier assemblies (4) in radially outward direction, and whereby a front main face of the transverse element (16) incorporates three thickened contact regions (15, 14; 18) intended for contacting a rear main surface of an adjacent element (16) in the belt (3), whereof two lower contact regions (15) are arranged most laterally on the body part (10) near the bearing surfaces thereof and whereof one upper contact region (14; 18) is arranged radially outward from the projecting boss (6) near an upper edge of the head part (12), **characterised in that** a part of the upper edge of the head part (12) extends over at least the lateral width of the projecting boss (6), either in a straight line, in a concave curve or in a convex curve having a radius of 10 mm or more.

2. Drive belt (3) according to claim 1, **characterised in that** the neck part (7) of the transverse element (16) is V-shaped, i.e. is provided with inclined side faces that diverge towards the head part (12) and **in that** the said part of the upper edge of the head part (12) extends over the full extent of the diverging neck part (7) thereof.

3. Drive belt (3) according to claim 1 or 2, **characterised in that** the upper contact region (18) of the transverse element (16) is shaped elongated and extends in parallel with and over the full extent of the said part of the upper edge of the head part (12) thereof.

4. Drive belt (3) according to one of the preceding claims, **characterised in that** on either side of the said part of the upper edge of the head part (12) the upper edge is S-shaped, i.e. includes a convexly curved part merging with a concavely curved part, whereby a smooth transition is formed to each lug (8) of the head part (12).

5. Method for forming a transverse element (16) of a drive belt (3) for use in a continuously variable transmission for passenger cars, in particular according to one of the preceding claims, which drive belt (3) comprises two endless carrier assemblies (4) and a large number of transverse elements (16), wherein each transverse element (16) is cut from metal sheet material by means of a blanking process with a body part (10) located radially inside and providing a bearing surface for each of the carrier assemblies (4), with a neck part (7) connected to the body part (10) and located between the carrier assemblies (4) and with a head part (12) connected to the neck part (7) and located radially outside the carrier assemblies, which head part (12) is provided with a projecting boss (6) and with two lugs (8) that extend in mutually opposite lateral directions, each lug (8) confining one of the carrier assemblies (4) in radially outward direction, and wherein a thickened contact region (14; 18) is formed radially outward from the projecting boss (6) near an upper edge of the head part (12) at least partly by a relative thinning of the lugs (8) in the said blanking process, **characterised in that** a part of the upper edge of the head part (12) extends over at least the lateral width of the projecting boss (6), either in a straight line, in a concave curve or in a convex curve having a radius of 10 mm or more.

## Patentansprüche

1. Querelement (32) für einen Antriebsriemen (3) für ein kontinuierlich veränderliches Getriebe, wobei eine Öffnung (33) zwischen einer Vorderseite (37) und einer Rückseite (38) des Querelements (32) verläuft, wobei durch die Öffnung ein Zugelement (31) des Antriebsriemens (3) durchgeführt sein kann, wobei ein Stegteil (34) des Querelements (32), das sich unter der Öffnung (33) befindet, an der Position der Öffnung (33) mit einer nach oben gerichteten Lagerfläche (42) versehen ist, die die untere Seite der Öffnung (33) ausbildet und mindestens in der Umfangsrichtung des Zugelements (31) mit einer asymmetrischen Oberflächenkontur versehen ist, von der ein höchster Punkt oder Teil (B) näher an der Vorderseite (37) als an der Rückseite (38) des Querelements (32) angeordnet ist, **dadurch gekennzeichnet, dass** das Querelement (32) auf seiner Rückseite (38) mit einer vorstehenden Ausstülpung (40) versehen ist und auf seiner Vorderseite (37) mit einer ausgesparten Vertiefung (41) versehen ist, die im Wesentlichen konzentrisch bezüglich der Ausstülpung (40) vorgesehen ist.

2. Querelement (32) nach Anspruch 1, **dadurch gekennzeichnet, dass** das Querelement (32) auf seiner Vorderseite (37) mit einer querlaufend angeordneten Kipplinie (18) versehen ist, unter welcher sich das Querelement (32) unter allen Umständen wirksam verjüngt.

3. Querelement (32) nach einem der Ansprüche 1 oder 2, **dadurch gekennzeichnet, dass** sich die Oberflächenkontur der Lagerfläche (42) im Wesentlichen aus drei Teilen (A, B und C) zusammensetzt, von denen ein erstes Teil (A) einen mehr oder weniger konvex gerundeten Übergang zwischen der Vorderseite (37) des Querelements (32) und dem höchsten Teil (B) des Querelements ausbildet, und von denen ein drittes Teil (C) unter allen Umständen wirksam vom höchsten Teil (B) schräg nach unten verläuft und an die Rückseite (38) des Querelements (32) anschließt.

4. Querelement (32) nach Anspruch 3, **dadurch gekennzeichnet, dass** das höchste Teil (B) im Wesentlichen senkrecht zur Vorderseite und Rückseite (37, 38) des Querelements (32) verläuft und dadurch zwischen einem Viertel und einem Sechstel der Gesamtabmessung der Kontur der Lagerfläche (42) abdeckt.

5. Kontinuierlich veränderliches Getriebe mit einem Antriebsriemen (3), der mit einem Querelement (32) nach einem der vorhergehenden Ansprüche versehen ist, **dadurch gekennzeichnet, dass** die Vorderseite (37) des Querelements (32) in der Vorzugsdrehrichtung des Antriebsriemens (3) während des Betriebs des Getriebes ausgerichtet ist.

## Revendications

1. Elément transversal (32) pour une courroie d'entraînement (3) pour une transmission à variation continue, comprenant une ouverture (33) s'étendant entre un côté avant (37) et un côté arrière (38) de l'élément transversal (32), à travers laquelle ouverture un élément de traction (31) de la courroie d'entraînement (3) peut être introduit, une partie de bande (34) de l'élément transversal (32) située sous l'ouverture (33) au niveau de la position de l'ouverture (33) étant pourvue d'une surface de support (42) orientée vers le haut qui forme le côté inférieur de l'ouverture (33) et qui, au moins dans la direction périphérique de l'élément de traction (31), est pourvue d'un contour de surface asymétrique, un point ou une partie (B) le ou la plus élevé(e) de ce contour étant situé(e) plus près du côté avant (37) que du côté arrière (38) de l'élément transversal (32), **caractérisé en ce que** l'élément transversal (32), sur son côté arrière (38), est pourvu d'une projection en saillie (40) et, sur son côté avant (37), est pourvu d'un renfoncement en retrait (41) qui est disposé substantiellement concentriquement par rapport à la projection (40).

2. Elément transversal (32) selon la revendication 1, **caractérisé en ce que** l'élément transversal (32), sur son côté avant (37), est pourvu d'une ligne d'inclinaison située transversalement (18), sous laquelle l'élément transversal (32), dans une mesure quelconque, se rétrécit effectivement sous forme conique.

3. Elément transversal (32) selon la revendication 1 ou 2, **caractérisé en ce que** le contour de surface de la surface de support (42) est substantiellement composé de trois parties (A, B et C), dont une première partie (A) forme une transition plus ou moins arrondie de manière convexe entre le côté avant (37) de l'élément transversal (32) et la partie la plus élevée (B) dudit élément transversal, et dont une troisième partie (C) est inclinée dans une mesure quelconque effectivement vers le bas depuis la partie la plus élevée (B) et se raccorde au côté arrière (38) de l'élément transversal (32).

4. Elément transversal (32) selon la revendication 3, **caractérisé en ce que** la partie la plus élevée (B) s'étend substantiellement perpendiculairement au côté avant et au côté arrière (37, 38) de l'élément transversal (32) et ce faisant, couvre entre un quart et un sixième de la mesure totale du contour de la surface de support (42).

5. Transmission à variation continue comprenant une courroie d'entraînement (3) pourvue d'un élément transversal (32) selon l'une quelconque des revendications précédentes, **caractérisée en ce que** le côté avant (37) de l'élément transversal (32) est orienté dans la direction prédominante de rotation de la courroie d'entraînement (3) au cours du fonctionnement de la transmission.
